Europäisches Patentamt

European Patent Office

Office européen des brevets

(11) Publication number: **0 439 933 A1**

# EUROPEAN PATENT APPLICATION

(21) Application number: 90313511.9

(51) Int. Cl.5: **B62B 9/12**

(22) Date of filing: **12.12.90**

(30) Priority: **27.01.90 GB 9001900**

(43) Date of publication of application:
**07.08.91 Bulletin 91/32**

(84) Designated Contracting States:
**DE ES FR GB IT**

(71) Applicant: **BRITAX RESTMOR LIMITED**
**Restmor Way Hackbridge Road**
**Hackbridge Surrey SM6 7AQ(GB)**

(72) Inventor: **Lightburn, Joseph Keith**
**122 Ampthill Road**
**Shefford, Bedfordshire(GB)**

(74) Representative: **Hollinghurst, Antony**
**Britax Limited Patent Department**
**Chichester West Sussex PO19 2AQ(GB)**

(54) **Pushchair.**

(57) A pushchair comprising a flexible fabric seat body (32) secured to a seat frame (26) which is pivotally mounted on a chassis frame (10) for angular movement between a forward facing position and a rearward facing position. A detachable headrest consists of a bag (40) arranged to fit cver one end of the seat frame (26), one side of the bag (40) comprising two layers (42, 44) of fabric with stiffening material between the two layers. The two layers (42, 44) are joined by stitching (46, 48, 50) which divides said one side into a central region (52) which lies in abutment with a backrest portion (36) of the fabric seat body (32) and side regions (54, 56) which project forwardly from the central region (52) to form side wings.

Fig.3.

EP 0 439 933 A1

# PUSHCHAIR

This invention relates to a pushchair of the type in which a flexible fabric seat body is secured to a seat frame which is pivotally mounted on a chassis frame for angular movement about a transverse horizontal axis between a position in which the seat body is forward facing and a position in which the seat body is rearward facing, the seat body being displaceable through an opening bounded by the seat frame so that one side of the fabric is in contact with the body of a seated occupant when forward facing and the other side of the fabric is in contact with the body of the seated occupant when rearward facing.

According to the invention, a pushchair of the type described above has a detachable headrest comprising a bag arranged to fit over one end of the seat frame, one side of the bag comprising two layers of fabric with stiffening material between the two layers, the two layers being joined by stitching which divides said one side into a central region which lies in abutment with a backrest portion of the fabric seat body and side regions which project forwardly from the central region to form side wings.

An embodiment of the invention will now be described, by way of example, with reference to the accompanying drawings, in which:

Figure 1 is a perspective view of a pushchair in accordance with the invention with the seat body in its forward facing position;

Figure 2 is a perspective view of the pushchair shown in Figure 1, taken from a different point and showing the seat body in its rearward facing position;

Figure 3 is a front perspective view of the detachable headrest of the pushchair shown in Figures 1 and 2; and

Figure 4 is a perspective view from behind of the headrest shown in Figure 3.

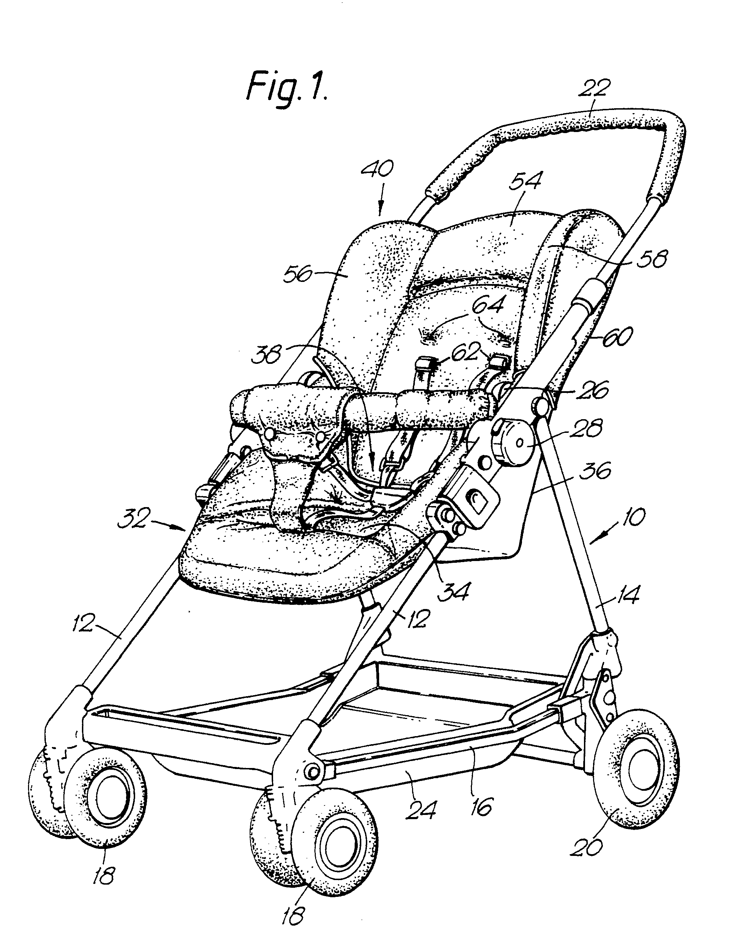

Referring first to Figure 1, a pushchair has a chassis frame 10 comprising two interconnected side frames each having a respective front frame member 12, a respective rear frame member 14 and a respective bottom frame member 16 joining the bottom ends of the front and rear frame members 12 and 14 and below which front and rear wheels 18 and 20 are mounted. The upper ends of the front frame members 12 are interconnected by respective limbs of a U-shaped handle 22. A luggage tray 24 is mounted between the bottom frame members 14. The pivotal interconnection between the various frame members described above and the manner in which they permit the pushchair to be folded, form no part of the present invention and will not be described further.

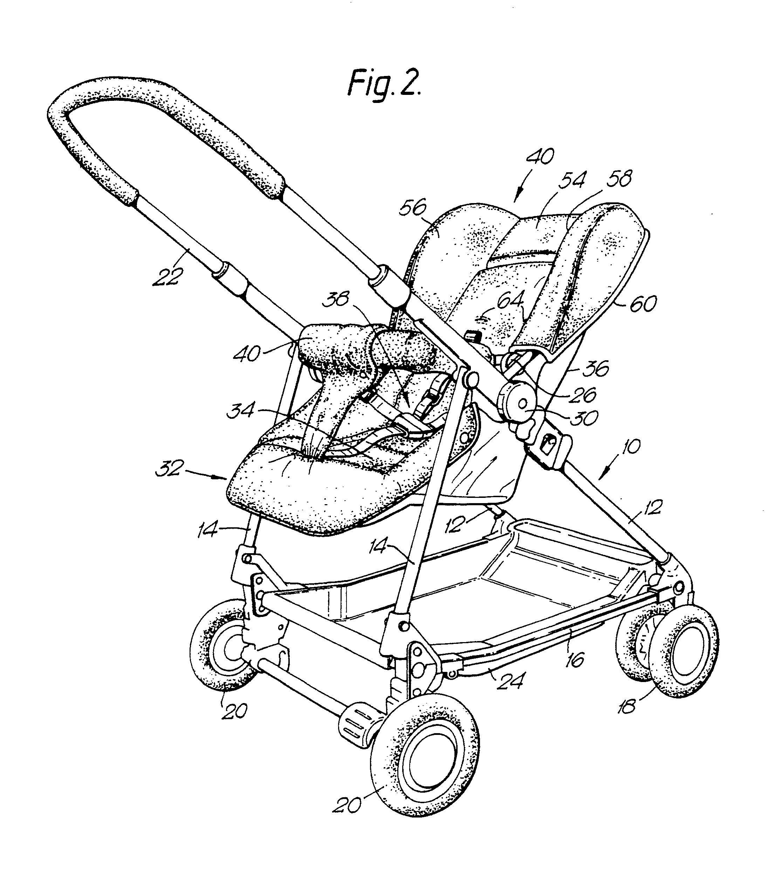

A rectangular seat frame 26 (best seen in Figure 2), formed from a single tubular member, is pivotally mounted on the front frame members 12 of the chassis frame 10 by respective lockable pivot joints 28 and 30 which allow the seat frame 26 to pivot about a horizontal transverse axis between the position in Figure 1 and the position shown in Figure 2. The locking pivot joints may be as described in GB-A-2212555.

A flexible fabric seat body 32, having a seat portion 34 and a backrest portion 36 is suspended from the seat frame 26 so that it can be pushed through the frame to change it from the position shown in Figure 1 to the position shown in Figure 2. The seat is provided with a harness 38, the straps of which project through respective slots in the seat body and which can be detached so as to allow them to be inserted through from the other side when the seat orientation is reversed. The seat also has a detachable bumper bar 40 as described in our co-pending European Patent Application No. 89312551.8.

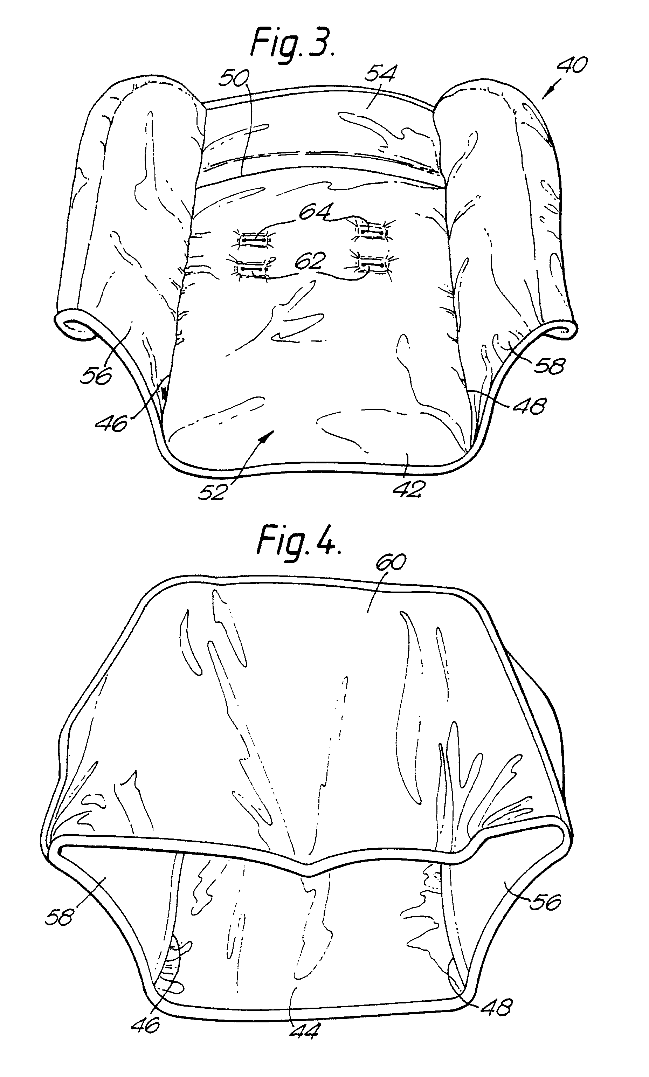

Turning now to Figures 3 and 4, a headrest comprises a fabric bag 40, one side of which comprises two layers of fabric 42, 44 with padding (e.g. non-woven fibrous material) between the two layers. The two layers 42 and 44 are joined by lines of stiching 46, 48, 50 which divide said one side into a main central panel 52, a top central panel 54 and two side panels 56 and 58. The back of the bag consists of a single piece of fabric 60 which is attached along its upper and side edges to the corresponding edges of the upper panel 54 and the side panels 56 and 58. The central panel 52 has two pairs of slots 62 and 64 providing two alternative positions for the shoulder straps of the harness 38.

In use, the headrest 40 is fitted over the backrest portion 36 of the seat. The central panels 52 and 54 abut against the fabric of the backrest portion 36 while the width of the central panels 52 and 54 in relation to the back 60 of the bag causes the panels 56 and 58 to project forwardly, as illustrated in Figures 1 and 2.

## Claims

1. A pushchair comprising a flexible fabric seat body (32) secured to a seat frame (26) which is pivotally mounted on a chassis frame (10) for angular movement about a transverse horizontal axis (28, 30) between a position in which the seat body (32) is forward facing and a position in which the seat body (32) is rearward facing, the seat body (32) being displaceable through an opening bounded by the seat frame (26) so that one side of the fabric is in contact with the body of a seated occupant when forward facing and the other side of the fabric is in contact with the body of the seated occupant when rearward facing, characterised by a detachable headrest comprising a bag (40) arranged to fit over one end of the seat frame (26), one side of the bag (40) comprising two layers (42, 44) of fabric with stiffening material between the two layers, the two layers (42, 44) being joined by stitching (46, 48, 50) which divides said one side into a central region (52) which lies in abutment with a backrest portion (36) of the fabric seat body (32) and side regions (54, 56) which project forwardly from the central region (52) to form side wings.

2. A pushchair according to claim 1, wherein the stiffening material comprises padding.

3. A pushchair according to claim 1 or 2, wherein the central region (52) has slots (62, 64) for permitting passage of the straps of a harness (38).

# Fig. 1.

# Fig. 2.

## Fig. 3.

## Fig. 4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 146 956 (R. J. CABAGNERO)<br>* page 1, line 71 - page 1, line 117; figure 1 *<br>– – – | 1,2 | B 62 B<br>9/12 |
| A | EP-A-0 050 017 (ANDREWS MACLAREN LTD.)<br>* page 4, line 26 - page 5, line 17; figures 1, 3, 12 *<br>– – – | 1,3 | |
| A | US-A-2 305 719 (S. LEE)<br>* column 2, line 72 - column 3, line 9; figures 1, 2 *<br>– – – – – | 1 | |
| | | | **TECHNICAL FIELDS SEARCHED (Int. Cl.5)**<br><br>B 62 B |

| The present search report has been drawn up for all claims | | |
|---|---|---|
| **Place of search**<br>The Hague | **Date of completion of search**<br>06 May 91 | **Examiner**<br>FRANKS B.G. |

CATEGORY OF CITED DOCUMENTS

X : particularly relevant if taken alone
Y : particularly relevant if combined with another
   document of the same catagory
A : technological background
O : non-written disclosure
P : intermediate document
T : theory or principle underlying the invention

E : earlier patent document, but published on, or after
   the filing date
D : document cited in the application
L : document cited for other reasons
................................................................
& : member of the same patent family, corresponding
   document